# EUROPEAN PATENT SPECIFICATION

(11) **EP 2 829 516 B1**
(45) Date of publication and mention of the grant of the patent: **26.12.2018**
(21) Application number: 13764493.6
(22) Date of filing: 16.01.2013
(51) Int. Cl.: C22B 3/20

(54) **PRODUCTION METHOD FOR HEMATITE FOR IRON PRODUCTION**
HERSTELLUNGSVERFAHREN FÜR HÄMATIT ZUR EISENERZEUGUNG
PROCÉDÉ DE PRODUCTION D'HÉMATITE POUR LA PRODUCTION DE FER

(30) Priority: 19.03.2012 JP 2012062794
(43) Date of publication of application: 28.01.2015
(73) Proprietor: Sumitomo Metal Mining Co., Ltd., Tokyo 105-8716 (JP)
(72) Inventor: SASAKI Hideki, Tokyo 105-8716 (JP); KAN Yasumasa, Tokyo 105-8716 (JP); MITSUI Hiroyuki, Tokyo 105-8716 (JP)
(74) Representative: Barker Brettell LLP
(86) International application number: PCT/JP2013/050671
(87) International publication number: WO 2013/140837

(56) References cited:
- WO-A1-2008/032634
- JP-A- S4 816 811
- JP-A- 2004 509 232
- JP-A- 2005 350 766
- JP-A- 2007 077 459
- JP-A- 2007 530 778
- JP-A- 2008 530 356
- JP-A- 2010 095 788
- US-A- 3 093 559
- US-A1- 2010 242 681

## Description

### TECHNICAL FIELD

The present invention relates to a production method for refining a leach residue obtained by hydrometallurgical refining of nickel oxide ore into hematite that can be used as an iron-making raw material and has low-grade sulfur.

### BACKGROUND ART

In steel smelting, a method of charging iron ore containing iron oxide into a blast furnace along with a reductant such as coke, heating and melting the iron ore under a reducing atmosphere to obtain crude steel, and refining the crude steel in a converter to obtain desired steel has been used.

The iron oxide that is a raw material of the steel is a limited resource, and furthermore it is gradually hard to obtain high-quality iron ore required to maintain a quality of steel.

Meanwhile, with respect to nickel becoming a raw material of stainless steel, technology for smelting low-grade oxide ore as a raw material due to a tendency toward resource exhaustion of sulfide ore that has been used in the past has been developed and put to practical use.

To be specific, nickel oxide ore such as limonite or saprolite is put into a pressure device such as an autoclave along with a sulfuric acid, and nickel is leached under high pressure and high temperature of about 240 to 260°C.

The nickel leached into a solution of the sulfuric acid is used as nickel metal or a nickel salt compound by adding a neutralizer to neutralize a surplus acid, separating a leach residue by solid-liquid separation, separating impurities to recover the leach residue as an intermediate raw material in the form of hydroxide or sulfide, and further refining the intermediate raw material.

In such a process called high pressure acid leach (HPAL), nickel can be almost completely leached even from low-grade ore in which valuable metals intended for recovery are contained by not more than 1% to 2% by weight (hereinafter indicated by "%" with regard to a grade). Further, the HPAL process has a feature of concentrating the valuable metals up to the same grade as a conventional raw material by producing an intermediate raw material from a leachate, and refining the nickel in a process similar to a conventional process.

Further, the HPAL process may be applied to various types of ores such as nickel sulfide ore, copper sulfide ore, and copper oxide ore, in addition to the nickel oxide ore (see, for example, Patent Documents 2 to 4).

Further, a main component of the leach residue obtained by the HPAL process is iron oxide having the form of hematite. This is secondarily obtained because each of oxide ore and sulfide ore of nickel or copper used as a raw material contains iron of an amount far more than a content of nickel or copper.

These leach residues are created at a high temperature, and thus have the form of oxide that is chemically or environmentally stable. However, the leach residues have no special utility value, and have been scrapped to a residue disposal yard. For this reason, it has been a grave challenge how to secure the disposal yards for an enormous amount of leach residues generated along with the smelting.

Furthermore, the leach residue of the HPAL process cannot be directly used for the aforementioned iron-making raw material. The reason is that the leach residue of the HPAL process contains gangue and impurities, particularly sulfur, in addition to the iron oxide and requires exhaust gas treatment, and thus is not suitable for the raw material used in the conventional iron-making process in common.

Particularly, a grade of sulfur in iron oxide usable for the iron-making raw material differs depending on facility capacity and an amount of production of individual ironworks, and generally needs to be suppressed to less than 1%.

The sulfur is hardly contained in the original nickel oxide ore. Nevertheless, the sulfur contained in the leach residue by about 1 to 3% results from calcium sulfate (plaster) generated by reaction of sulfuric acid and limestone or slaked lime added as the neutralizer in order to neutralize free sulfuric acid remaining at the leach slurry.

Therefore, it is considered that what creates a soluble salt may be used as the added neutralizer, not the slaked lime or what forms insoluble sediment, such as the slaked lime, after the neutralization.

For example, the neutralizer suitable for such application includes sodium hydroxide, potassium hydroxide, magnesium hydroxide, and magnesium oxide.

However, these neutralizers are expensive, and have a limited amount of production. Thus, when a large quantity of neutralizer is required as in the HPAL process, it is industrially difficult to cover the whole quantity.

For this reason, there has been no choice but to use a calcium-based neutralizer in whole or in part which forms the insoluble sediment after the neutralization as described above, and thereby mixing of the sulfur has been inevitable. As such, it has been impossible to process the leach residue created in the HPAL process into the hematite and to use it as the iron-making raw material.

On the other hand, a method of separating sulfur in jarosite using a pressure device such as an autoclave is also known.

For example, Patent Document 1 discloses a method that includes stirring a jarosite-containing residual and a zinc sulfide inclusion in an autoclave at least under oxygen partial pressure of 1000 kPa at a temperature of 130 to 170°C along with a free sulfuric acid of 40 to 100 g/l, substantially dissolving iron and zinc fractions of a concentrate containing the residual and zinc sulfide, introducing the solution into a leach circulation passage for zinc electrolysis to settle iron in the form of hematite, and separating sulfur from the above solid, and supplying the residual for separate application.

However, this method requires an expensive device such as an autoclave, increases a facility cost, and further has a problem even in the aspect of productivity.

Patent Document 5 proposes a production process for obtaining hematite by roasting a leach residue that is obtained by a copper hydrometallurgical process in which a copper ore is subjected to pressure leaching with sulfuric acid, at a temperature of 600°C or higher and 800°C or lower. Furthermore, Patent Document 6 discloses a process for the refining of laterite ores comprising nickel and iron and proposes a production process for obtaining hematite by leaching the laterite ores with concentrated sulfuric acid to obtain a leached solution containing nickel sulfate and iron sulfate, drying the leached solution, and roasting a resulting residue at a temperature of 523°C or higher and 565°C or lower.

### CITATION LIST

### PATENT DOCUMENT

Patent Document 1: JP H03-176081 A
Patent Document 2: JP H06-116660 A
Patent Document 3: JP 2005-350766 A
Patent Document 4: JP 2005-281733 A
Patent Document 5: US 2010/242681 A1
Patent Document 6: US 3 093 559 A

### SUMMARY OF THE INVENTION

### TECHNICAL PROBLEM

The invention is intended to provide a production method for refining hematite, which has such a low sulfur component as to be used as an iron-making raw material, from a leach residue containing iron oxide produced by a high pressure acid leach (HPAL) process.

### SOLUTION TO THE PROBLEMS

To solve the above problems, the present invention provides a method according to claim 1 for producing hematite for ironmaking from a leach residue that contains an iron component and is produced by a high pressure acid leach, HPAL, process, the method further comprising heating a leach residue, obtained by neutralization of free sulfuric acid remaining at a leachate in the HPAL process with limestone or slaked lime as a neutralizer for generating calcium sulfate, to 600°C or more.

The leach residue may be heated to 800°C or more and 1400°C or less.

### ADVANTAGEOUS EFFECTS OF THE INVENTION

The present invention can bring about the following industrial significant effects:
(1) It is possible to easily obtain hematite that has low-grade sulfur and can be used as an iron-making raw material;
(2) Since a raw material that can be cheaply and stably procured is used, hematite with the low-grade sulfur can be inexpensively obtained;
(3) Wastes such as a leach residue discharged in a refining process can be applied to the iron-making raw materials, and it is thus possible to remarkably reduce an amount of the scrapped leach residue and further reduce production costs by lowering an environmental risk, reducing scrapping costs, and reducing construction costs of a leach residue disposal yard; and
(4) When hematite with the low-grade sulfur is produced, a special facility is not required, and thus establishment of its producing process is easy.

### BRIEF DESCRIPTION OF DRAWINGS

Fig. 1 is a flow chart showing a recovery process of performing high-pressure sulfuric acid leach on a mineral containing valuable metals and iron to recover the valuable metals, and further showing a refining process of hematite having low-grade sulfur which is associated with the recovery process; and
Fig. 2 is a diagram illustrating a relation between a heating temperature and a grade of sulfur in a leach residue.

### DESCRIPTION OF EMBODIMENTS

The present invention is to heat a leach residue obtained when a mineral, that is a nickel oxide ore, containing valuable metals and iron is subjected to high-pressure sulfuric acid leach, to separate sulfur, and to produce high-purity hematite that can be used as an iron-making raw material having a low sulfur content.

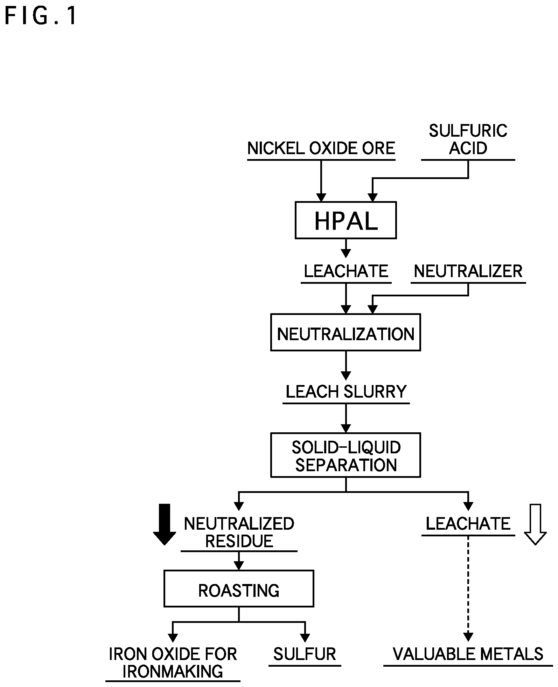

Fig. 1 illustrates a flow for a recovery process of performing high-pressure sulfuric acid leach on a mineral, that is a nickel oxide ore, containing valuable metals and iron to recover the valuable metals and a further flow for a refining process of a production method according to the present invention of producing hematite having low-grade sulfur from a leach residue obtained in association with the recovery process.

The flow for the recovery process of the valuable metals is indicated by an outline arrow, and the flow for the refining process of the hematite according to the invention is indicated by a black arrow.

### [Refining process of hematite]

A leach residue to be a starting raw material of the present process is obtained as sediment when a leach slurry, which is generated by neutralizing a leachate obtained in the event of high-pressure sulfuric acid leach as illustrated in Fig. 1, is subjected to solid-liquid separation. As such, the leach residue is formed in a state in which a reaction product of a neutralizer input in the neutralization process and a surplus acid is contained. Accordingly, limestone or slaked lime added as the neutralizer and sulfuric acid are reacted to neutralize a free sulfuric acid remaining in the leach slurry. Thereby, the leach residue contains sulfur resulting from created calcium sulfate (plaster) by several percentage (%).

### [Heating of leach residue]

Therefore, as a method of separating a sulfur component from such a leach residue containing several percentage of sulfur, the leach residue is heated on given conditions. That is, as illustrated in Fig. 1, the iron oxide (hematite) for ironmaking which has low-grade sulfur is refined by roasting the leach residue and evaporating the sulfur component.

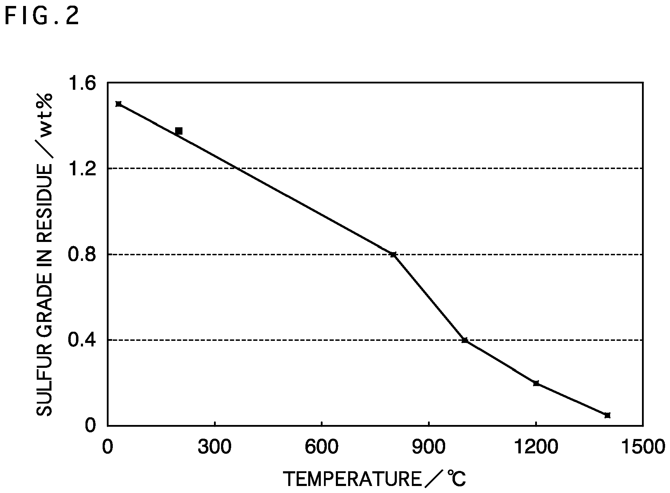

Fig. 2 illustrates a relation between a heating temperature and the sulfur grade in the leach residue.

A temperature at which the leach residue is heated is 600°C or more, preferably 800°C or more, which is an effective temperature in order to make the sulfur grade in the leach residue less than 1%. Further, when the heating temperature exceeds 800°C, the sulfur grade is sharply reduced, which is more preferable. When the heating temperature becomes 1300°C, the sulfur grade can be reduced up to 0.1% or less, which is more preferable, but when the heating temperature more preferably exceeds 1400°C, this gives no great difference, and is not very preferable in the aspect of facility investment such as an increase in heating energy or a need for heat resistance of a furnace wall material. Accordingly, the heating temperature is 600°C or more and 1400°C or less, and preferably 800°C or more and 1300°C or less.

A heating time is affected by a furnace size and an amount of the residue, and thus may be adequately adjusted. Further, the heating is performed in an oxidizing atmosphere such as atmospheric air. Thereby, along with the heating, the sulfur is removed from the leach residue as sulfur dioxide, and the high-purity iron oxide (hematite) is formed.

### EXAMPLES

Hereinafter, the invention will be described using examples.

### Example 1

The following Example 1 falls partially within the scope of the invention, with that subject-matter falling outside of the scope of the invention being included to aid the understanding of the skilled person.

Nickel oxide ore having 1% nickel grade and 46 to 48% iron grade was adjusted to be a slurry of 30 to 40% by weight, and then was mixed with sulfuric acid of 64% by weight. Subsequently, the slurry was charged into a pressure device, heated to 240 to 250°C, and maintained for one hour, and a leachate was obtained by leaching nickel in the ore (HPAL).

After the leaching, the leachate was cooled to about 70°C, and then slaked lime was added to neutralize a surplus acid (neutralization). The slurry containing a leach residue after the surplus acid was neutralized (hereinafter the leach residue after the neutralization is referred to as "neutralized residue') was subjected to solid-liquid separation using Nutsche and a filtering bottle, and was separated into the leachate and the neutralized residue (solid-liquid separation).

In the neutralized residue, an iron grade was 49.9%, and a sulfur grade was 1.5%.

Next, the neutralized residue was equally divided into six parts, which were respectively raised to 30°C, 200°C, 800°C, 1000°C, 1200°C, and 1400°C, heated for one hour, and cooled.

The sulfur grade of the leach residues after the cooling were analyzed, and the analyzed results were illustrated in Fig. 2.

As illustrated in Fig. 2, it is found that the sulfur grade is reduced up to about 1% at about 600°C, and that, when the temperature exceeds 800°C, the sulfur grade is sharply reduced, and the sulfur can be effectively separated.

In Table 1, results of measuring the iron and sulfur grades in the neutralized residue after the heating are illustrated. The iron and sulfur grades were measured by fluorescent X-ray analysis.

**[Table 1]**

| | Sample | Sulfur grade [% by weight] |
|---|---|---|
| Supply | Neutralized residue | 1.5 |
| Heating | 800°C | 0.8 |
| | 1000°C | 0.4 |
| | 1200°C | 0.2 |

With this use of the invention, it is possible to separate the sulfur from the HPAL leach residue, and to refine the hematite so as to be usable as the raw material for ironmaking.

## Claims

1. A method of producing hematite for ironmaking from a leach residue that contains an iron oxide and that is produced by a high pressure sulfuric acid leach, HPAL process of a nickel oxide ore in the presence of an oxidant, the method comprising;
heating the leach residue to 600°C or more,
wherein the leach residue is obtained as sediment when a leach slurry is generated by neutralization of free sulfuric acid remaining in a leachate in the high pressure sulfuric acid leach process with limestone or slaked lime as a neutralizer for generating calcium sulfate and is subjected to solid-liquid separation of the leach slurry.

2. The method of producing hematite for ironmaking according to claim 1,
wherein the leach residue is heated to 800°C or more and 1400°C or less.

## Patentansprüche

1. Verfahren zur Produktion von Hämatit zur Eisenherstellung aus einem Auslaugungsrückstand, der ein Eisenoxid enthält, und der durch einen Hochdruck-Schwefelsäureauslaugungs-, HPAL, Prozess eines Nickeloxiderzes in Gegenwart eines Oxidationsmittels hergestellt wird, wobei das Verfahren umfasst:
Erwärmen des Auslaugungsrückstands auf 600 °C oder mehr,
wobei der Auslaugungsrückstand als Sediment erhalten wird, wenn eine Auslaugungsaufschlämmung durch Neutralisation von freier Schwefelsäure, die in einem Auslaugungseluat in dem Hochdruck-Schwefelsäureauslaugungsprozess verbleibt, mit Kalkstein oder gelöschten Kalk als Neutralisierungsmittel erzeugt wird, um Calciumsulfat zu erzeugen, und Fest-Flüssig-Trennung der Auslaugungsaufschlämmung unterzogen wird.

2. Verfahren zur Produktion von Hämatit zur Eisenherstellung nach Anspruch 1,
wobei der Auslaugungsrückstand auf 800 °C oder mehr und 1400 °C oder weniger erwärmt wird.

## Revendications

1. Procédé de production d'hématite pour la fabrication de fer à partir d'un résidu de lixiviation qui contient un oxyde de fer et qui est produit par un procédé de lixiviation à l'acide sulfurique sous haute pression, HPAL, d'un minerai d'oxyde de nickel en présence d'un oxydant, le procédé comprenant :
le chauffage du résidu de lixiviation jusqu'à 600 °C ou plus,
dans lequel le résidu de lixiviation est obtenu sous la forme d'un sédiment quand une bouillie de lixiviation est générée par neutralisation d'acide sulfurique libre restant dans un lixiviat dans le procédé de lixiviation à l'acide sulfurique sous haute pression avec du calcaire ou de la chaux éteinte comme neutraliseur pour générer du sulfate de calcium et est soumise à une séparation solide-liquide de la bouillie de lixiviation.

2. Procédé de production d'hématite pour la fabrication de fer selon la revendication 1,
dans lequel le résidu de lixiviation est chauffé jusqu'à 800 °C ou plus et 1400 °C ou moins.
